# EUROPÄISCHE PATENTSCHRIFT

(11) **EP 1 841 050 B1**
(45) Veröffentlichungstag und Bekanntmachung des Hinweises auf die Patenterteilung: **03.02.2016**
(21) Anmeldenummer: 06022686.7
(22) Anmeldetag: 31.10.2006
(51) Int. Cl.: H02J 3/26, H02J 3/38

(54) **Verfahren zur Umwandlung einer Gleichspannung in eine dreiphasige Wechselspannung**
Method of converting a DC voltage into a three-phase voltage
Procédé pour convertir une tension continue en une tension triphasée

(30) Priorität: 27.01.2006 DE 102006003904
(43) Veröffentlichungstag der Anmeldung: 03.10.2007
(73) Patentinhaber: SMA Solar Technology AG, 34266 Niestetal (DE)
(72) Erfinder: Becker, Holger, D-34117 Kassel (DE); Cramer, Günther, D-34128 Kassel (DE); Bremicker, Sven, D-36211 Alheim-Baumbach (DE); Dingel, Thorsten, D-34295 Edermünde (DE); Engel, Bernd, D-38302 Wolfenbüttel (DE); Groote, Wilfried, D-34246 Vellmar (DE); Greizer, Frank, D-34260 Kaufungen (DE); Laschinski, Joachim, D-34131 Kassel (DE); Victor, Matthias, D-34266 Niestetal (DE); Westphal, Torben, D-34127 Kassel (DE)
(74) Vertreter: Lahnor, Peter

(56) Entgegenhaltungen:
- EP-A- 0 817 350
- WO-A-2005/117136
- WO-A-2006/084294
- JP-A- 5 308 780

## Beschreibung

Die Erfindung betrifft ein Verfahren mit den im Oberbegriff des Anspruchs 1 genannten Merkmalen.

Bekannt sind netzgekoppelte Anlagen zur dezentralen Energieversorgung, z.B. Photovoltaik-Anlagen mit Solarmodulen und Wechselrichtern oder Anlagen mit Brennstoffzellen und Wechselrichtern. Bei niedrigen Leistungen wird üblicherweise ein einphasiger Wechselrichter verwendet und einphasig eingespeist, bei hohen Leistungen erfolgt die Einspeisung dreiphasig. Der Einsatz eines dreiphasigen Wechselrichters ist jedoch teuer, da dieser einen schlechteren Wirkungsgrad aufweist und in einer geringeren Stückzahl produziert wird.

Daher nutzt man bei hohen Leistungen üblicherweise drei einphasige Wechselrichter. Fällt jedoch nur einer der Wechselrichter aus, z.B. in Folge eines Kurzschlusses, entsteht häufig eine ein zulässiges Maß übersteigende unsymmetrische Netzeinspeisung bzw. eine Schieflast durch die unabhängige Einspeisung.

Aus der JP 05 308780 A ist eine Anlage mit drei DC-Quellen bekannt. Jede DC-Quelle ist einem einphasigen Wechselrichter zugeordnet. Jeder Wechselrichter ist einer Phase R, S, T zugeordnet. Die Wechselrichter sind zudem mit einem Netz verbunden. Diese Anlage ermöglicht ein Verfahren zur Umwandlung einer Gleichspannung in eine dreiphasige Wechselspannung mittels mehrerer einphasiger Wechselrichter, die an verschiedenen Phasen angeschlossen sind, wobei die Wechselspannung zur Netzeinspeisung in ein elektrisches Energieversorgungsnetz vorgesehen ist. Hierbei soll eine unsymmetrische Lastverteilung reduziert werden.

Die WO 2006/084294 A1 schlägt eine Gruppenanordnung von z. B. 3 x 5 Wechselrichtern und eine Master-Slave Struktur der Wechselrichter vor, und zwar im Zusammenhang mit einer Schieflast-Einspeisung.

Aus der WO 2005/117136 A2 ist eine Anlage bekannt, bei der ein zentrales Steuer- und Überwachungsmodul für eine Photovoltaikanlage verwendet wird. Eine Schieflast zwischen den Phasen über 4,6 kVA soll nicht zulässig sein. Damit Module von Solarwechselrichtern sich nicht gegenseitig beeinflussen können, ist ein Kommunikationsbus vorhanden, um unnötige Abschaltungen einzelner Solarwechselrichter zu vermeiden.

Der Erfindung liegt die Aufgabe zugrunde, ein Verfahren anzugeben, das bei Verwendung von Einphasen-Wechselrichtern unvertretbare Schieflasten vermeidet.

Diese Aufgabe wird durch die kennzeichnenden Merkmale des Anspruches 1 in Verbindung mit seinen Oberbegriffsmerkmalen sowie durch die kennzeichnenden Merkmale des Anspruches 9 in Verbindung mit seinen Merkmalen aus dem Oberbegriff gelöst.

Die Erfindung beruht auf dem Gedanken, eine unsymmetrische Netzeinspeisung auf ein vertretbares Maß zu begrenzen und nicht die gesamte Anlage auszuschalten, so dass die intakten Wechselrichter in die zugehörigen Phasen weiter einspeisen können. Dadurch, dass nicht die gesamte Anlage stillgesetzt wird, steigt die Qualität der Stromversorgung bzw. erhöht sich die Stromverfügbarkeit. Das bedeutet, dass erfindungsgemäß die Leistung der anderen beiden Wechselrichter auf einen vorgegebenen Wert initiiert wird, wenn nur einer der Wechselrichter, aus welchen Gründen auch immer, z.B. durch Kurzschluss ausfällt. Dieser Wert ist größer Null.

Durch die Erfindung wird die Qualität des elektrischen Energieversorgungsnetzes verbessert unter Tolerierung einer zulässigen Schieflast, wobei durch Einphasen-Wechselrichter ein hoher Wirkungsgrad, Modularität und eine kostengünstige Fertigung möglich ist.

In einer vorteilhaften Weiterbildung des erfindungsgemäßen Verfahrens ist vorgesehen, dass die Leistung der einzelnen Wechselrichter auf Dauer jeweils auf 2-20 kVA, insbesondere auf etwa 4,6 kVA begrenzt wird. Vorzugsweise ist vorgesehen, dass die Leistung der einzelnen Wechselrichter vorübergehend, insbesondere für eine Dauer von etwa 10 Minuten, jeweils auf etwa 5 kVA begrenzt wird. Diese Maßnahme ist besonders geeignet für netzgekoppelte Anlagen zur dezentralen Energieversorgung mit Wechselrichtern höherer Nennleistung, insbesondere mit Nennleistungen größer 4,6 kVA.

Vorteilhaft ist es, wenn der Ausfall des Wechselrichters durch ein Messsignal einer Zusatzschaltung des Wechselrichters erfasst wird, wobei ein durch das Messsignal entstehendes Weiterleitungssignal zur Leistungsbegrenzung vorgesehen ist. Durch das Messsignal wird in einfacher Weise der Ausfall eines Wechselrichters erkannt, wobei eine solche Zusatzschaltung in einer zusätzlichen Platine jeweils an jedem Wechselrichter untergebracht werden kann. Hierdurch können handelsübliche einphasige Wechselrichter mit geringen Umbaumaßnahmen zur Realisierung des erfindungsgemäßen Verfahrens eingesetzt werden.

Um die Leistung der Wechselrichter zu begrenzen ist zweckmäßigerweise vorgesehen, dass das Weiterleitungssignal zu den Prozessoren der Wechselrichter weitergeleitet wird, um mittels Prozessorsteuerung die Leistung der Wechselrichter zu begrenzen. Der Prozessor bzw. der Mikroprozessor in jedem der intakten Phasen empfängt also eine Information, dass die Leistung zu begrenzen ist und der Wechselrichter kann beispielsweise über eine entsprechende PWM-Steuerung die erforderliche Leistung erzeugen.

Eine weitere vorteilhafte Maßnahme zeichnet sich dadurch aus, dass das Messsignal durch einen Strom einer Konstantstromquelle erzeugt wird, wobei der Strom der Konstantstromquelle im Milliamperebereich liegt. Durch den geringen Messstrom, der vorzugsweise in jeder Zusatzplatine erzeugbar ist, ist bei geringer zusätzlicher Leistung bzw. einem hohen Wirkungsgrad eine praktische Umsetzung der Ausfallerfassung möglich. Besonders vorteilhaft ist es, wenn eine Fehlerkommunikation bei Ausfall des Wechselrichters durch ein oder mehrere externe Kabel zwischen den Wechselrichtern erfolgt. Dadurch können die unabhängigen einphasigen Wechselrichter praktisch miteinander kommunizieren, so dass der Status eines Wechselrichters erkannt wird. Im Fall des Ausfalls eines Wechselrichters oder mehrerer Wechselrichter wird die erfindungsgemäße Leistungsbegrenzung der übrigen Wechselrichter umgesetzt.

Weitere vorteilhafte Weiterbildungen der Erfindung ergeben sich aus den Unteransprüchen.

Die Erfindung wird anhand der Figurenbeschreibung näher erläutert, in der weitere Vorteile derselben beschrieben sind.

Es zeigt:
- Fig. 1: ein Ausführungsbeispiel einer erfindungsgemäßen Schaltungsanordnung zur Begrenzung einer Schieflast,
- Fig. 2: eine Schaltung mit zwei Gruppen von Einphasen-Wechselrichtern mit einem Netzschütz und einem dreiphasigen Spannungsüberwachungsmodul,
- Fig. 3: eine Schaltung mit zwei Gruppen von Einphasen-Wechselrichtern mit einem Netzschütz ohne ein dreiphasiges Spannungsüberwachungsmodul, und
- Fig. 4: eine Schaltung mit zwei Gruppen von Einphasen-Wechselrichtern, wobei eine Netztrennung unmittelbar durch die Wechselrichter bewirkt wird.

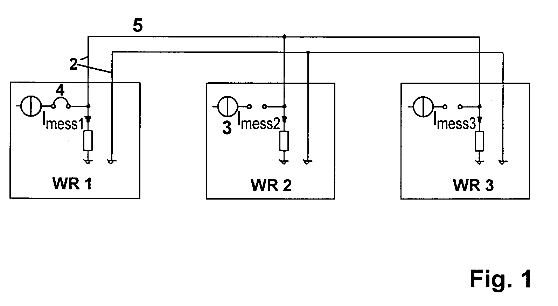

Fig. 1 zeigt ein Beispiel mit drei einphasigen Wechselrichtern WR1, WR2, WR3, insbesondere Photovoltaik-Wechselrichtern, die eine dreiphasige Wechselspannung in ein Niederspannungsnetz einspeisen. Wie später gezeigt ist, wandeln die Wechselrichter eine dezentral, insbesondere durch Solarmodule, erzeugte Gleichspannung in eine genormte Niederspannung von z.B. 230V/400V/50Hz um.

Jeder der Wechselrichter WR1-WR3 ist mit einer Schaltung versehen, die eine sogenannte Mitnahmeschaltung bzw. eine Ausfall-Messschaltung 1 bilden. Die Ausfall-Messschaltung 1 ist eine zusätzliche elektronische Schaltung, die über eine externe Verbindung 2 die drei einphasigen Wechselrichter WR1-WR3 verbindet. Eine Fehlerkommunikation bei Ausfall eines Wechselrichters erfolgt durch ein oder mehrere externe Kabel 5 zwischen den Wechselrichtern WR1-WR3.

Die gezeigte Schaltung hat die Aufgabe, den Ausfall eines Wechselrichters zu detektieren, so dass bei einer unsymmetrischen Leistungseinspeisung infolge des Ausfalls eines Wechselrichters die Leistung der übrigen Wechselrichter vermindert werden kann, um eine Schieflast auf ein zulässiges Maß zu reduzieren. Die Einzel-Leistung der Wechselrichter WR1-WR3 soll im Dauerbetrieb auf z.B. 4,6 kVA begrenzt werden.

Jede Messschaltung 1 umfasst eine Gleichstromquelle 3, insbesondere eine Konstantstromquelle. Diese ist durch eine elektrisch leitende Brücke 4 zuschaltbar, so dass nur eine der Stromquellen 3 einen Messstrom liefert, wie Fig. 1 veranschaulicht. Weiterhin umfasst jede Messschaltung einen nicht näher dargestellten Anschluss für ein Mess- und/oder ein Ausgangssignal. Dadurch kann ein Störungs- oder ein O.K.-Signal an die anderen beiden funktionsfähigen Wechselrichter gemeldet werden.

Vorzugsweise ist jeder Wechselrichter WR1-WR3 mit einer Zusatzschaltung versehen, wobei jeder Wechselrichter die gleiche zusätzliche Schaltung aufweist. Die Schaltung hat Anschlüsse für die Gleichstromquelle und die Kommunikationsleitungen. Eine der Stromquellen liefert also den Messstrom zur Ausfall-Messung, der wenige mA beträgt. In Fig. 1 liefert der Wechselrichter WR1 den Messstrom. Jeder der Wechselrichter hat aber die Möglichkeit, über das Ausgangssignal eine Störung bzw. ein O.K.-Signal an die anderen beiden Wechselrichter zu melden. Ein Freigabesignal wird nur dann erzeugt, wenn die Wechselrichter an allen drei Phasen einspeisebereit sind. Hierbei melden alle Wechselrichter ein O.K.-Signal. Die Kommunikation ist auch über Funk realisierbar.

In einer nicht näher gezeigten Schaltungsanordnung in der Zusatzschaltung wird der Ausfall des Wechselrichters durch ein Messsignal erfasst. Ein durch das Messsignal entstehendes Weiterleitungssignal steuert die Leistungsbegrenzung auf z.B. 4,6 kVA. Das Weiterleitungssignal wird nämlich zu den Prozessoren der Wechselrichter weitergeleitet, um mittels Prozessorsteuerung oder z.B. PWM-Steuerung die Leistung der Wechselrichter zu begrenzen.

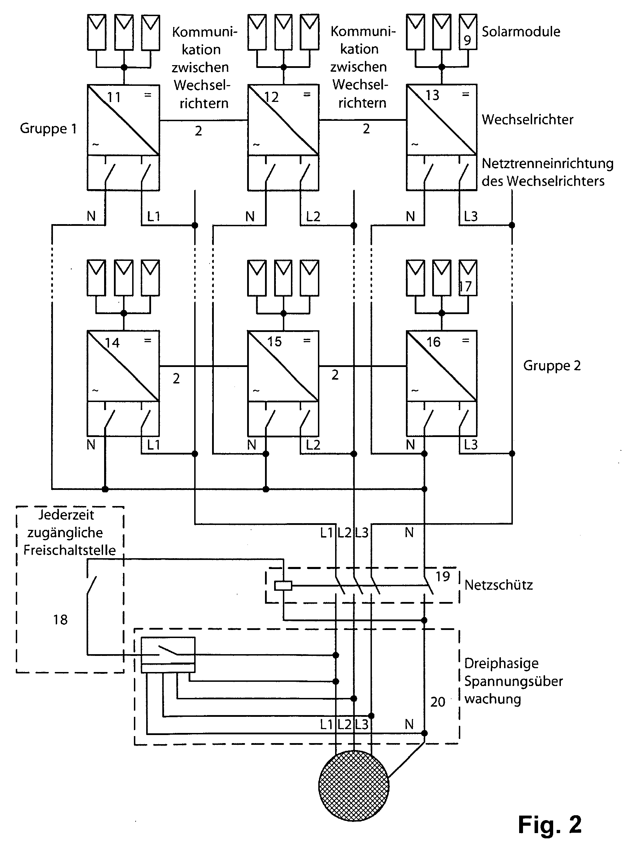

Fig. 2 zeigt eine Schaltung mit zwei Gruppen GR1, GR2 von Einphasen-wechselrichtern 11-16, die zur Leistungserhöhung parallel geschaltet sind. Die Gruppenlösung ist kostengünstiger, da einphasige Wechselrichter in hohen Stückzahlen hergestellt werden und einen besseren Wirkungsgrad aufweisen.

Jeder Wechselrichter 11-16 wird eingangsseitig mit von Solarmodulen 9 erzeugter Gleichspannung versorgt. Ein Wechselrichter erzeugt praktisch Wechselstrom einer Phase L1, L2 oder L3. Jeder Wechselrichter ist außerdem mit einer externen Kommunikationsleitung 2 versehen.

Aus Gründen der Sicherheit enthält die gezeigte Anlage üblicherweise eine dem Personal des Netzbetreibers zugängliche Schaltstelle mit Trennfunktion bzw. ein Freischaltmittel 18.

Schaltstellen können oberirdische Anschlusspunkte eines Hausanschlusses an das Energieversorgungsnetz, z.B. ein Kabelanschlussschrank, Kabelverteilerschrank, eine Trafostation oder ein Hausanschlusskasten sein, sofern dieser dem Personal des Versorgungsnetzbetreibers uneingeschränkt zugänglich ist.

Das Freischaltmittel 18 ist mit einem Schaltschütz 19 so verbunden, dass das Schütz 19 durch Betätigen des Freischaltmittels 18 eine Netztrennung bewirken kann. Außerdem ist das Schütz 19 mit einem dreiphasigen Spannungsüberwachungsmodul 20 gekoppelt, so dass ein zusätzlicher Netzschutz gegeben ist. Wie Fig. 2 zeigt, ist das Freischaltmittel 18 mit dem dreiphasigen Spannungsüberwachungsmodul 20 verbunden. Durch dieses Modul 20 wird erreicht, dass bei Über- oder Unterschreitung der Spannung einer Phase über vorgegebene Grenzwerte alle Wechselrichter vom Netz getrennt werden. Dadurch wird der Netzschutz weiter verbessert.

Es sind also bevorzugterweise mehrere Gruppen von drei einphasigen Wechselrichtern ausgangsseitig an ein dreiphasiges Schutzschaltgerät (Schütz 19) angeschlossen, wobei das Schaltgerät durch das manuelle, externe Freischaltmittel 18 oder durch ein Spannungsüberwachungsmodul 20 ausschaltbar ist.

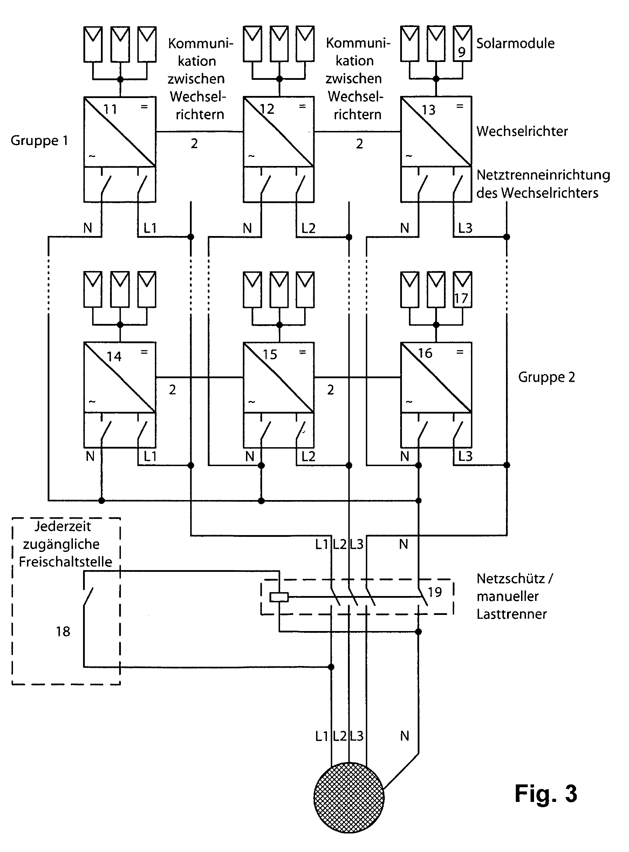

Bei der Lösung gemäß Fig. 3 wird das Modul 20 eingespart, wodurch der Installationsaufwand reduziert wird. Das Schütz 19 ist jedoch weiterhin an das Freischaltmittel 18 angeschlossen.

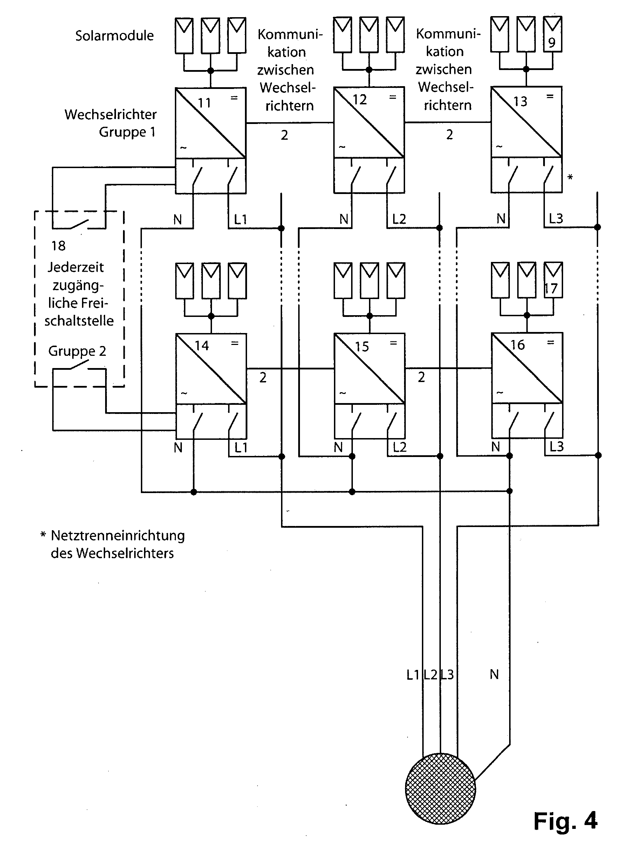

Die Ausfall-Schaltung kann außerdem, wie Fig. 4 zeigt, so ausgeführt sein, dass ein Signal von außen erfolgt, z.B. durch Betätigung des Freischaltmittels 18 und dieses eine Netztrennung der Wechselrichter 11-16 bewirkt. Somit kann auch auf das Schütz 19, einen Lasttrenner oder auf ein anderes Schaltgerät verzichtet werden.

Die gezeigten Einrichtungen zur Netzüberwachung sind also mit jeweils einem zugeordneten Schaltorgan bzw. mit einer Freischaltstelle versehen. Bei einphasiger Einspeisung über einen der Wechselrichter 11-16 in das Energieversorgungsnetz wird eine solche Einrichtung bis zu einer Nennleistung ≤ 4,6 kVA eingesetzt, in dreiphasiger Ausführung bis zu einer PV-Wechselrichter-Leistung von 30 kVA (PV=Photovoltaik). Sie kann in den PV-Wechselrichter integriert oder als eigenständige Schutzeinrichtung ausgeführt werden. Die Einrichtung kann zudem eine Spannungs- und Frequenzüberwachung beinhalten und kann als zusätzliches Kriterium festgestellte Sprünge der Netzimpedanz einer bestimmten Größenordnung auswerten. Aufgrund dieser Kriterien, und zwar der redundanten Ausführung der Schaltorgane und der Selbstüberwachung des Messsystems, kann die Einrichtung Sicherheitsanforderungen erfüllen, so dass die geforderte dem Personal des Netzbetreibers jederzeit zugängliche Schaltstelle mit Trennfunktion und die sonst für den Entkopplungsschutz vorgesehene separate Spannungs- und Frequenzüberwachung vereinfacht werden kann.

Für PV-Anlagen mit Nennleistungen >30 kVA ist sowohl eine jederzeit zugängliche Freischaltstelle als auch eine dreiphasige Spannungsüberwachung erforderlich. Vorzugsweise wird dieses bei Anlagen mit Wechselrichtern wie folgt realisiert:
Die Anlage kann durch das Schütz 19 in der Hauptleitung, welche die Anlage mit dem Netzanschlusspunkt verbindet, getrennt werden. Dabei werden bei größeren Anlagen, wie gezeigt, Gruppen von Wechselrichtern gebildet. Diese können also jeweils mit einem eigenen Schütz vom Netz getrennt werden. Dadurch können Kosten eingespart werden, da ein Schütz großer Leistung teurer ist als mehrere Schütze kleiner Schaltleistung. Möglich sind auch motorisch betriebene Schalter als Schaltgeräte für den Netzschutz.

Auf das Schütz kann, wie in Fig. 2 gezeigt ist, ein separates Spannungsüberwachungsrelais (Modul 20 und Schütz 19) wirken, welches die Spannungen in den drei Phasen des Netzanschlusses misst. Verlässt eine Spannung den eingestellten Bereich, wird durch das Spannungsüberwachungsrelais das Netzschütz 19 geöffnet.

Um die jederzeit zugängliche Freischaltstelle zu realisieren, kann beispielsweise an der Außenseite eines Hauses, z.B. in einem abschließbaren Kasten, ein Knebelschalter untergebracht werden, welcher ebenfalls auf das Netztrennschütz 19 wirkt.

Besitzt ein einphasig einspeisender Wechselrichter eine dreiphasige Netzüberwachung, so kann auf das Spannungsüberwachungsmodul 20 verzichtet werden. Werden drei einphasig einspeisende Wechselrichter auf die drei Netzphasen verteilt und durch eine Mitnahmeschaltung bzw. Ausfall-Schaltung 1 miteinander verbunden, so dass beim Ausfall eines Wechselrichters die anderen beiden Wechselrichter ebenfalls abschalten, so entspricht dies einer dreiphasigen Spannungsüberwachung. In diesem Fall kann auf das Spannungsüberwachungsrelais gemäß Fig. 2 verzichtet werden.

Die Möglichkeit, die Wechselrichter 11-16 durch einen Kontakt von außen vom Netz zu trennen, lässt sich konstruktiv leicht mit der in Fig. 2 dargestellten Mitnahmeschaltung verbinden, indem praktisch die Stromquelle 3 der Mitnahmeschaltung (vgl. Iₘₑₛₛ 1 in Fig. 2) über einen externen Schalter ein- und ausgeschaltet werden kann. Die durch diese Zusatzfunktion entstehenden Kosten sind minimal. Auf das Netztrennschütz 19 kann in diesem Fall verzichtet werden.

In den Figuren ist ein Verfahren zur Umwandlung einer durch eine Photovoltaik-Anlage erzeugte Gleichspannung in eine dreiphasige Wechselspannung mittels mehrerer einphasiger Wechselrichter beschrieben worden, wobei die Wechselspannung zur Netzeinspeisung in ein elektrisches Energieversorgungsnetz vorgesehen ist. Erfindungsgemäß wird bei Ausfall eines Wechselrichters eine unsymmetrische Leistungsverteilung der Netzeinspeisung dadurch reduziert, dass die Leistung der übrigen Wechselrichter begrenzt wird.

## Patentansprüche

1. Verfahren zur Umwandlung einer durch eine netzgekoppelte Anlage zur dezentralen Energieversorgung erzeugte Gleichspannung in eine dreiphasige Wechselspannung mittels mehrerer einphasiger Wechselrichter (WR1-WR3), die an verschiedenen Phasen (L1, L2, L3) angeschlossen sind, wobei die Wechselspannung zur Netzeinspeisung in ein elektrisches Energieversorgungsnetz und zur dezentralen Energieversorgung vorgesehen ist,
**dadurch gekennzeichnet,**
**dass** bei Ausfall eines Wechselrichters (WR1-WR3) eine unsymmetrische Leistungsverteilung der Netzeinspeisung dadurch reduziert wird, dass die Leistung der übrigen Wechselrichter derart begrenzt wird,
**dass** die Leistung der übrigen Wechselrichter auf einen vorgegebenen Wert, der größer Null ist, vermindert wird, so dass bei einer unsymmetrischen Leistungseinspeisung eine Schieflast auf ein zulässiges Maß reduziert wird.

2. Verfahren nach Anspruch 1,
**dadurch gekennzeichnet, dass** die Leistung der einzelnen Wechselrichter (WR1-WR3) auf Dauer jeweils auf 2-20 kVA, insbesondere auf etwa 4,6 kVA begrenzt wird.

3. Verfahren nach Anspruch 1 oder 2,
**dadurch gekennzeichnet, dass** die Leistung der einzelnen Wechselrichter (WR1-WR3) vorübergehend, insbesondere bei einer Dauer von etwa 10 Minuten, jeweils auf etwa 5 kVA begrenzt wird.

4. Verfahren nach einem der vorhergehenden Ansprüche,
**dadurch gekennzeichnet, dass** der Ausfall des Wechselrichters (WR1-WR3) durch ein Messsignal einer Zusatzschaltung des Wechselrichters erfasst wird, wobei ein durch das Messsignal entstehendes Weiterleitungssignal zur Leistungsbegrenzung oder zur Netztrennung der Wechselrichter vorgesehen ist.

5. Verfahren nach Anspruch 4,
**dadurch gekennzeichnet, dass** das Weiterleitungssignal zu Prozessoren der Wechselrichter (WR1-WR3) weitergeleitet wird, um mittels Prozessorsteuerung die Leistung der Wechselrichter zu begrenzen.

6. Verfahren nach einem der Ansprüche 4 oder 5,
**dadurch gekennzeichnet, dass** das Messsignal durch einen Strom einer Konstantstromquelle erzeugt wird, wobei der Strom der Konstantstromquelle im Milliamperebereich liegt.

7. Verfahren nach einem der vorhergehenden Ansprüche,
**dadurch gekennzeichnet, dass** eine Kommunikation zwischen den Wechselrichtern (WR1-WR3) stattfindet, über die jeder Wechselrichter durch ein oder mehrere externe Kabel seine Einspeisebereitschaft mitteilt.

8. Verfahren nach einem der vorhergehenden Ansprüche,
**dadurch gekennzeichnet, dass** eine Kommunikation zwischen den Wechselrichtern (WR1-WR3) stattfindet, wobei jeder Wechselrichter über Funk seine Einspeisebereitschaft mitteilt.

9. Schaltungsanordnung zur Ausführung des Verfahrens nach einem der vorhergehenden Ansprüche, mit mehreren einphasigen Wechselrichtern (WR1-WR3) einer dezentralen Energieversorgungsanlage, wobei die Wechselrichter (WR1 -WR3) an verschiedenen Phasen (L1, L2, L3) angeschlossen sind,
**dadurch gekennzeichnet, dass** jeder Wechselrichter eine Ausfall-Messschaltung (1) aufweist, um bei einer unsymmetrischen Leistungseinspeisung infolge des Ausfalls des Wechselrichters die Leistung der übrigen Wechselrichter dadurch zu reduzieren, dass die Leistung der übrigen Wechselrichter auf einen vorgegebenen Wert, der größer Null ist, vermindert wird, so dass bei einer unsymmetrischen Leistungseinspeisung eine Schieflast auf ein zulässiges Maß reduziert wird.

10. Schaltungsanordnung nach Anspruch 9,
**dadurch gekennzeichnet, dass** jede Messschaltung eine Gleichstromquelle (3), insbesondere eine Konstantstromquelle umfasst, die über eine elektrisch leitende Brücke (4) zuschaltbar ist, so dass nur eine der Stromquellen (3) den Messstrom liefert, wobei jede Messschaltung einen Anschluss für ein Mess- und/oder ein Ausgangssignal umfasst, derart, dass ein Störungs- oder ein O.K.-Signal an die anderen beiden Wechselrichter gemeldet werden kann.

11. Schaltungsanordnung nach Anspruch 9 oder 10,
**dadurch gekennzeichnet, dass** jeder Wechselrichter mit einer externen Kommunikationsleitung(2) ausgeführt ist.

12. Schaltungsanordnung nach einem der Ansprüche 9 bis 11, **dadurch gekennzeichnet, dass** mehrere Gruppen (GR1, GR2) von drei einphasigen Wechselrichtern (11-16) ausgangsseitig an ein dreiphasiges Schutzschaltgerät angeschlossen sind, wobei das Schaltgerät durch ein manuelles, externes Freischaltmittel (18) ausschaltbar ist.

13. Schaltungsanordnung nach Anspruch 12,
**dadurch gekennzeichnet, dass** das Schaltgerät ein Schütz (19) ist.

14. Schaltungsanordnung nach einem der vorhergehenden Ansprüche, **gekennzeichnet durch** eine Ausführung derart, dass bei Ausfall eines Wechselrichters bei Über- oder Unterschreitung der Spannung einer Phase über vorgegebene Grenzwerte alle Wechselrichter vom Netz getrennt werden.

15. Schaltungsanordnung nach Anspruch 14,
**gekennzeichnet durch** eine Ausführung derart, dass die Netztrennung **durch** direktes Ausschalten der Wechselrichter erfolgt, wobei ein manuelles, externes Freischaltmittel (18) unmittelbar an alle Gruppen der Wechselrichter angeschlossen ist.

## Claims

1. Method for converting a DC voltage generated by a grid-coupled installation for decentralized energy supply into a three-phase AC voltage by means of a plurality of single-phase inverters (WR1-WR3) which are connected to different phases (L1, L2, L3) wherein the AC voltage is provided for grid feeding into an electrical energy supply grid and for decentralized energy supply,
**characterized in that**
in the event of failure of an inverter (WR1-WR3) an asymmetrical power distribution of the grid feeding is reduced by limiting the power of the other inverters in such a way
that the power of the other inverters is reduced to a predefined value that is greater than zero, such that in the event of asymmetrical power feeding an unbalanced loading is reduced to a permissible amount.

2. Method according to Claim 1,
**characterized in that**
the power of the individual inverters (WR1-WR3) is permanently limited in each case to 2-20 kVA, in particular to approximately 4.6 kVA.

3. Method according to Claim 1 or 2,
**characterized in that**
the power of the individual inverters (WR1-WR3) is limited temporarily, in particular for a duration of approximately 10 minutes, to approximately 5 kVA respectively.

4. Method according to any of the preceding claims,
**characterized in that** the failure of the inverter (WR1-WR3) is detected by a measurement signal of a supplementary circuit of the inverter, wherein a forwarding signal arising as a result of the measurement signal is provided for power limiting or for grid disconnection of the inverters.

5. Method according to Claim 4,
**characterized in that**
the forwarding signal is forwarded to processors of the inverters (WR1-WR3) in order to limit the power of the inverters by means of processor control.

6. Method according to either of Claims 4 and 5,
**characterized in that**
the measurement signal is generated by a current of a constant-current source, wherein the current of the constant-current source is in the milliamperes range.

7. Method according to any of the preceding claims,
**characterized in that** a communication between the inverters (WR1-WR3) takes place, by means of which each inverter communicates its readiness for feeding by one or a plurality of external cables.

8. Method according to any of the preceding claims,
**characterized in that** a communication between the inverters (WR1-WR3) takes place, wherein each inverter communicates its readiness for feeding by radio communication.

9. Circuit arrangement for implementing the method according to any of the preceding claims, comprising a plurality of single-phase inverters (WR1-WR3) of a decentralized energy supply installation, wherein the inverters (WR1-WR3) are connected to different phases (L1, L2, L3),
**characterized in that** each inverter comprises a failure measuring circuit (1) in order, in the event of asymmetrical power feeding owing to the failure of the inverter, to reduce the power of the other inverters by limiting the power of the other inverters to a predefined value that is greater than zero, such that in the event of asymmetrical power feeding an unbalanced loading is reduced to a permissible amount.

10. Circuit arrangement according to Claim 9,
**characterized in that** each measuring circuit comprises a DC current source (3), in particular a constant-current source, which can be connected via an electrically conductive bridge (4) such that only one of the current sources (3) supplies the measurement current, wherein each measuring circuit comprises a terminal for a measurement signal and/or an output signal, in such a way that a disturbance signal or an O.K. signal can be reported to the other two inverters.

11. Circuit arrangement according to Claim 9 or 10,
**characterized in that** each inverter is implemented with an external communication line (2).

12. Circuit arrangement according to any of Claims 9 to 11,
**characterized in that** a plurality of groups (GR1, GR2) of three single-phase inverters (11-16) are connected on their output side to a three-phase protective switching device, wherein the switching device can be switched off by a manual, external switching means (18).

13. Circuit arrangement according to Claim 12,
**characterized in that** the switching device is a contactor (19).

14. Circuit arrangement according to any of the preceding claims,
**characterized by** an implementation in such a way that in the event of failure of an inverter in the event of the voltage of a phase exceeding or falling below predefined limit values, all the inverters are disconnected from the grid.

15. Circuit arrangement according to Claim 14,
**characterized by** an implementation in such a way that the grid disconnection is effected by the inverters being directly switched off, wherein a manual, external switching means (18) is directly connected to all the groups of inverters.

## Revendications

1. Procédé pour la conversion d'une tension continue générée par une installation reliée au réseau à des fins d'alimentation décentralisée en énergie en une tension alternative triphasée au moyen d'une pluralité d'onduleurs (WR1-WR3) qui sont raccordés à des phases différentes (L1, L2, L3), dans lequel la tension alternative est prévue pour une alimentation de réseau dans un réseau d'alimentation en énergie électrique et à des fins d'alimentation décentralisée en énergie,
**caractérisé en ce que**, lors d'une panne d'un onduleur (WR1-WR3), une répartition de charge asymétrique de l'alimentation du réseau est réduite par limitation de la puissance des onduleurs restants,
**en ce que** la puissance des onduleurs restants est réduite à une valeur prédéterminée qui est supérieure à zéro de manière à ce que, lorsqu'une alimentation en puissance asymétrique est fournie, une charge asymétrique soit réduite à une valeur acceptable.

2. Procédé selon la revendication 1,
**caractérisé en ce que** la puissance des onduleurs individuels (WR1-WR3) est respectivement limitée en permanence à 2-20 kVA, et plus particulièrement à environ 4,6 kVA.

3. Procédé selon la revendication 1 ou 2,
**caractérisé en ce que** la puissance des onduleurs individuels (WR1-WR3) est respectivement limitée temporairement, notamment pendant une durée d'environ 10 minutes, à environ 5 kVA.

4. Procédé selon l'une quelconque des revendications précédentes,
**caractérisé en ce que** la panne de l'onduleur (WR1-WR3) est détectée au moyen d'un signal de mesure d'un circuit supplémentaire de l'onduleur, dans lequel il est prévu un signal de réacheminement dérivé du signal de mesure à des fins de limitation de la puissance ou d'isolation des onduleurs vis-à-vis du réseau.

5. Procédé selon la revendication 4,
**caractérisé en ce que** le signal de réacheminement est réacheminé vers des processeurs des onduleurs (WR1-WR3) afin de limiter la puissance des onduleurs au moyen d'une commande par processeur.

6. Procédé selon l'une quelconque des revendications 4 ou 5,
**caractérisé en ce que** le signal de mesure est généré par l'intermédiaire d'un courant d'une source de courant constant, dans lequel le courant de la source de courant constant est de l'ordre du milliampère.

7. Procédé selon l'une quelconque des revendications précédentes,
**caractérisé en ce qu'**il se produit entre les onduleurs (WR1-WR3) une communication par l'intermédiaire de laquelle chaque onduleur signale par l'intermédiaire d'un ou plusieurs câbles externes le fait qu'il est prêt à fournir une alimentation.

8. Procédé selon l'une quelconque des revendications précédentes,
**caractérisé en ce qu'**il se produit entre les onduleurs (WR1-WR3) une communication, dans lequel chaque onduleur signale par radio le fait qu'il est prêt à fournir une alimentation.

9. Agencement de circuit destiné à mettre en ouvre le procédé selon l'une quelconque des revendications précédentes, comportant une pluralité d'onduleurs monophasés (WR1-WR3) d'une installation d'alimentation décentralisée en énergie, dans lequel les onduleurs (WR1-WR3) sont raccordés à des phases différentes (L1, L2, L3),
**caractérisé en ce que** chaque onduleur comprend un circuit de mesure de panne (1) permettant, lors d'une alimentation en puissance asymétrique consécutive à la panne de l'onduleur, de réduire la puissance des autres onduleurs en diminuant la puissance des autres onduleurs à une valeur prédéterminée qui est supérieure à zéro, de manière à ce qu'une charge asymétrique soit réduite à une valeur acceptable lors d'une alimentation en puissance asymétrique.

10. Agencement de circuit selon la revendication 9,
**caractérisé en ce que** chaque circuit de mesure comprend une source de courant constant (3), notamment une source de courant constant qui peut être mise en circuit par l'intermédiaire d'un pont électriquement conducteur (4), de manière à ce que seule l'une des sources de courant (3) délivre le courant de mesure, dans lequel chaque circuit de mesure comprend un connecteur destiné à un signal de mesure et/ou à un signal de sortie afin qu'un signal de défaut ou qu'un signal de bon fonctionnement puisse être envoyé aux deux autres onduleurs.

11. Agencement de circuit selon la revendication 9 ou 10,
**caractérisé en ce que** chaque onduleur est réalisé de manière à comporter une ligne de communication externe (2).

12. Agencement de circuit selon l'une quelconque des revendications 9 à 11, **caractérisé en ce qu'**une pluralité de groupes (GR1, GR2) de trois onduleurs monophasés (11-16) sont raccordés du côté de la sortie à un disjoncteur de protection triphasé, dans lequel le disjoncteur peut être mis hors circuit à l'aide d'un moyen de déverrouillage externe (18).

13. Agencement de circuit selon la revendication 12,
**caractérisé en ce que** le disjoncteur est un contacteur (19).

14. Agencement de circuit selon l'une quelconque des revendications précédentes,
**caractérisé par** une forme de réalisation selon laquelle, en cas de panne d'un onduleur, lorsque la tension d'une phase devient supérieure ou inférieure à une valeur limite prédéterminée, tous les onduleurs sont isolés du réseau.

15. Agencement de circuit selon la revendication 14,
**caractérisé par** une forme de réalisation selon laquelle l'isolation vis-à-vis du réseau s'effectue par une déconnexion directe des onduleurs, dans lequel un moyen de déverrouillage manuel externe (18) est directement raccordé à tous les groupes des onduleurs.
